# EUROPÄISCHE PATENTANMELDUNG

(11) **EP 4 606 452 A1**
(43) Veröffentlichungstag der Anmeldung: **27.08.2025**
(21) Anmeldenummer: 25159309.1
(22) Anmeldetag: 21.02.2025
(51) Int. Cl.: B01D 29/23, B01D 29/35, B01D 29/44, B01D 29/64, B01D 29/66, B01D 35/157

(54) **BERNOULLI-FILTER-VORRICHTUNG UND VERFAHREN ZUM REINIGEN EINER BERNOULLI-FILTER-VORRICHTUNG**

(30) Priorität: 26.02.2024 DE 102024105325
(71) Anmelder: Georg Schünemann GmbH, 28201 Bremen (DE)
(72) Erfinder: Linster, Wolfgang, 28203 Bremen (DE)
(74) Vertreter: Eisenführ Speiser

(57) **Zusammenfassung**

Die Erfindung betrifft eine Filter-Vorrichtung (10) zum Filtern eines Fluids, insbesondere eine Bernoulli-Filter-Vorrichtung (10), aufweisend ein Gehäuse (12), einen Einlass (14) zum Einbringen des zu filternden Fluids in das Gehäuse (12), wenigstens ein in dem Gehäuse (12) angeordnetes Filterelement (20) zum Filtern des Fluids, einen Auslass (16) zum Ausgeben des gefilterten Fluids aus dem Gehäuse (12), und eine Filter-Reinigungseinrichtung (30) zum Reinigen des Filterelements (20) von Rückständen des gefilterten Fluids, wobei dem Auslass (16) für das gefilterte Fluid am Gehäuse (12) eine Druckhalteeinheit (46) zum Aufrechterhalten eines definierten Mindestdruckes (pₘᵢₙ) im Gehäuse (12) während des Reinigens zugeordnet ist.

## Beschreibung

Die Erfindung bezieht sich auf -Filter-Vorrichtung zum Filtern eines Fluids, insbesondere Bernoulli-Filter-Vorrichtung, aufweisend ein Gehäuse, einen Einlass zum Einbringen des zu filternden Fluids in das Gehäuse, wenigstens ein in dem Gehäuse angeordnetes Filterelement zum Filtern des Fluids, einen Auslass zum Abgeben des gefilterten Fluids aus dem Gehäuse, und eine Filter-Reinigungseinrichtung zum Reinigen des Filterelements von Rückständen des gefilterten Fluids,. Die Erfindung bezieht sich des Weiteren auf ein Verfahren zum Reinigen einer -Filter-Vorrichtung.

Filter-Vorrichtungen der eingangs genannten Art sind im Stand der Technik bekannt und werden in verschiedensten industriellen Anwendungen, beispielsweise in der petrochemischen oder pharmazeutischen Industrie oder auch Schiffbau oder in der Agrarwirtschaft, zum Herausfiltern von Verunreinigungen aus verschiedensten geförderten Prozessfluiden eingesetzt. Eine solche -Filter-Vorrichtung weist üblicherweise ein Gehäuse mit einem Einlass und einem Auslass und ein im Gehäuse angeordnetes Filterelement auf. Das zu filternde Fluid wird über den Einlass in das Gehäuse eingebracht, mittels des im Gehäuse angeordneten Filterelements, welches häufig zylindrisch ausgebildet ist, von darin enthaltenen Verunreinigungen befreit, und über den Auslass wird das gefilterte Fluid aus dem Gehäuse ausgegeben.

Solche gattungsgemäßen Filter-Vorrichtungen weisen zudem eine Filter-Reinigungseinrichtung zum Reinigen des Filterelements von im Filterelement angesammelten Rückständen aus dem gefilterten Fluid auf. Die Filter-Reinigungseinrichtung hat vorzugsweise wenigstens ein Filter-Reinigungselement, welches während des Reinigens in das Filterelement eingeführt und entlang einer Zentralachse des Filterelements, insbesondere entlang der Filterelement-Innenseite, bewegt wird. Ferner wird durch das Gehäuse ein Spülstrom hindurch und entlang eines Abschnitts des Filterelements geleitet. Wegen der vorhandenen Querschnittsverengung zwischen dem Reinigungselement und der Innenseite des Filterelements, entsteht eine erhöhte Strömungsgeschwindigkeit an der Innenseite des Filterelements. Durch die erhöhte Strömungsgeschwindigkeit werden die sich im Filterelement abgesetzten Rückstände mit dem Spülstrom abgespült und herausgeleitet. Die Reinigung eines solchen Filterelements erfolgt in der Regel berührungslos allein durch die erzeugte Erhöhung der Strömungsgeschwindigkeit.

Beispielsweise offenbaren DE 10 2005 055 555 A1, DE 10 2011 007 003 A1 oder DE 10 2018 123 151 A1 Filter-Vorrichtungen zum Reinigen von Fluiden bzw. Abtöten von in einem Fluid enthaltenen Lebewesen. Neben einer Maximierung des mit einer solchen Filter-Vorrichtung zu erreichenden Durchsatzes beim Filtern der Fluide besteht zunehmend der Bedarf, die Filterfeinheit zu erhöhen, um auch kleinere Verunreinigungen aus einem zu filternden Fluid mittels solcher Filter-Vorrichtungen herausfiltern zu können. Das macht es notwendig nach einer bestimmten Betriebsdauer eines in der Vorrichtung verwendeten Filterelements dieses von den herausgefilterten Rückständen zu befreien, um die volle Funktionsfähigkeit wiederherzustellen und dessen Standzeit zu verlängern und für eine nahezu unbegrenzte Anzahl an Filtervorgängen verwenden zu können. Hinsichtlich der Filterfeinheit, die oft auch durch die Porengröße der für die Ausgestaltung der Filterelemente verwendeten Filtermaterialien definiert wird, hat sich im Stand der Technik gezeigt, dass das Reinigen der Filterelemente unterhalb einer Porengröße von 100 µm an solchen Filter-Vorrichtungen, insbesondere Bernoulli-Filter-Vorrichtungen, nur unzureichend funktioniert. An bekannten Filter-Vorrichtungen, die eine gewisse Mindeststandzeit der Filterelemente gewährleisten müssen, können daher nur Filterelemente mit einer begrenzten Porengröße von größer 100 µm eingesetzt werden.

Der Erfindung liegt daher die Aufgabe zugrunde, eine Filter-Vorrichtung sowie ein Verfahren zum Reinigen einer solchen Vorrichtung aufzuzeigen, mithilfe derer auf einfache Weise auch Filterelemente mit einer vergrößerten Filterfeinheit eingesetzt bzw. gereinigt werden können. Insbesondere liegt der Erfindung die Aufgabe zugrunde, eine Filter-Vorrichtung sowie ein Reinigungsverfahren anzugeben, welche zu den bekannten Vorrichtungen und Verfahren zumindest eine alternative Ausgestaltung offenbart.

Die Erfindung löst die ihr zugrundeliegende Aufgabe bei einer Filter-Vorrichtung zum Filtern eines Fluids, insbesondere einer Bernoulli-Filter-Vorrichtungen, mit den Merkmalen nach Anspruch 1. Insbesondere ist dem Auslass für das gefilterte Fluid am Gehäuse eine Druckhalteeinheit zum Aufrechterhalten eines definierten Mindestdruckes im Gehäuse während des Reinigens zugeordnet.

Die Erfindung verfolgt den Ansatz, mithilfe der dem Gehäuseauslass der Vorrichtung zugeordneten Druckhalteeinheit einen definierten Innendruck im Gehäuse der Vorrichtung während des Reinigens des Filterelements zu gewährleisten, mittels dessen die Reinigungswirkung während des Reinigungsvorgangs des Filterelements erhöht wird. Insbesondere ist durch die dem Gehäuseauslass zugeordnete Druckhalteeinheit bewirkt, dass durch den insbesondere auf der Außenseite des Filterelements anliegenden Druck beim Reinigen des Filterelements und einem damit verbundenen Führen des Spülstroms entlang eines Abschnitts, insbesondere entlang einer Innenseite, des Filterelements sich zwischen der Innen- und Außenseite des Filterelements ein vergrößerter Druckunterschied aufbaut, der lokal zu einer Art Rückspülwirkung in dem Abschnitt des Filterelements führt. Im Filterelement angesammelte Rückstände werden somit an der Innenseite des Filterelements verbessert herausgelöst bzw. abgespült. Aufgrund der verbesserten Reinigungswirkung an den Filterelementen können nunmehr auch Filterelemente mit einer vergrößerten Filterfeinheit eingesetzt und die geforderten Standzeiten erreicht werden, die sonst an den aus dem Stand der Technik bekannten Filter-Vorrichtungen nicht verwendbar wären.

Gemäß einer bevorzugten Weiterbildung der Erfindung ist die Filter-Reinigungseinrichtung dazu eingerichtet, Filterelemente mit einer Porengröße kleiner 100 µm, bevorzugt kleiner 70 µm, besonders bevorzugt kleiner 40 µm wirksam zu reinigen. Durch die Druckhalteeinheit ist im Gehäuse der Filter-Vorrichtung auf der Außenseite des Filterelements ein - bevorzugt konstant - hoher Druck erzeugt, der die Reinigungswirkung an den Filterelementen während des Reinigens unterstützt. Insbesondere mit dem beim Reinigen des Filterelements umgesetzten Spülvorgang ist beim Entlangbewegen des Filter-Reinigungselements an der Innenseite des Filterelements und der sich dabei einstellenden erhöhten Strömungsgeschwindigkeit zwischen Filter-Reinigungselement und Innenseite des Filterelements der sich positiv auswirkende Druckunterschied zur Außenseite des Filterelements erzeugt. Wegen des entstehenden Druckunterschieds ist auf Höhe des Filter-Reinigungselements neben der erhöhten Strömungsgeschwindigkeit beim Spülen des Filterelements eine Rückspülwirkung des Fluids von der Außenseite in Richtung der Innenseite des Filterelements bewirkt. Damit ist das Herauslösen von im Filterelement angesammelter Rückständen begünstigt und die Reinigungswirkung am Filterelement insgesamt verbessert. An der erfindungsgemäßen Filter-Vorrichtung, insbesondere einer Bernoulli-Filter-Vorrichtung, können nunmehr Filter mit einer Porengröße von bevorzugt kleiner 100 µm, vorzugsweise kleiner 70 µm, besonders bevorzugt kleiner 40 µm eingesetzt werden.

In einer bevorzugten Ausgestaltung der Filter-Vorrichtung ist vorgesehen, dass die Druckhalteeinheit unmittelbar in den Auslass am Gehäuse integriert ist. Damit ist eine kompakte Ausgestaltung der erfindungsgemäßen Filter-Vorrichtung erreicht. Zudem ist der das Reinigen des Filterelements unterstützende Mindestdruck im Gehäuse, der bevorzugt wenigstens 0,7 bar beträgt, auf den Teil eines die Filter-Vorrichtung aufweisenden Systems beschränkt, in dem der Druck vorrangig benötigt wird. Durch das Integrieren der Druckhalteeinheit in bzw. an das Gehäuse der Filter-Vorrichtung sind keine weiteren Komponenten oder Bauteile notwendig, wodurch insgesamt eine kostengünstige Fertigung im Vergleich zur Ausgestaltung der Druckhalteeinheit als separate Komponente bewirkt ist. Zum Anschließen der erfindungsgemäßen Filter-Vorrichtung im System sind mit den Ein- und Ausgängen am Gehäuse nur noch die entsprechende Verbindungsleitungen zu koppeln.

Vorzugsweise weist die Druckhalteeinheit einen Kanalabschnitt für das gefilterte Fluid auf, der bezogen auf den Auslass am Gehäuse einen verringerten Querschnitt hat. Mit der bevorzugt direkt im Auslass am Gehäuse montierten Druckhalteeinheit ist eine Verringerung des Strömungsquerschnitts im Vergleich zu einem Gehäuseauslass ohne darin angeordneter Druckhalteeinheit bewirkt. Die erfindungsgemäße Filter-Vorrichtung kann nunmehr in Bereichen eingesetzt werden, die wegen ihres geringen Volumenstroms sonst nicht für die Anwendung derartiger Filter-Vorrichtungen geeignet wären. Speziell Anwendungen mit relativ geringen Volumenströmen, an denen oder mittels derer sich sonst keine wirksame Reinigung eines Filterelements umsetzen ließe, können nunmehr wegen der im Auslassbereich des Gehäuses verwirklichten Druckhaltung, trotz ihres vergleichsweise geringen Volumenstroms, auch zum Reinigen des Filterelements eingesetzt werden.

In einer besonders bevorzugten Ausführung ist die Druckhalteeinheit als Düse oder einstellbare Blende ausgeführt, durch deren daran ausgebildeten verringerten Strömungsquerschnitte der benötigte Druck in der Filter-Vorrichtung, insbesondere einer Bernoulli-Filter-Vorrichtung, für zumindest das in bestimmten Zeitabständen durchzuführende Reinigen des Filterelements aufrechterhalten werden kann.

Gemäß einer bevorzugten Weiterbildung der erfindungsgemäßen Filter-Vorrichtung ist die Druckhalteeinheit als Druckhalteventil ausgebildet. Mit dem Vorsehen eines Druckhalteventils als Druckhalteeinheit ist eine konstruktiv einfache Möglichkeit für das Aufrechterhalten eines geforderten Druckes innerhalb des Gehäuses der Filter-Vorrichtung aufgezeigt. Vorzugsweise kann mit einem Druckhalteventil ein zu erzielender Mindestdruck innerhalb des Gehäuses und damit sowohl am Eingang als auch am Ausgang der erfindungsgemäßen Filter-Vorrichtung erzielt werden, ohne durch die Druckhalteeinheit das Strömen des Fluids, insbesondere beim Spülvorgang des Filterelements, zuzulassen. Vorzugsweise liegt der innerhalb des Gehäuses zu erzeugende Mindestdruck bei etwa 0,7 bar, ab dem auch bei verhältnismäßig geringen Volumenströmen eine zuverlässige Reinigungswirkung aufgrund der sich mit einstellenden Rückspülwirkung am Filterelement erzielen lässt.

Eine Weiterbildung der erfindungsgemäßen Filter-Vorrichtung sieht vor, dass die Druckhalteeinheit einen ihren Auslassquerschnitt definierenden Flanschkörper aufweist, der vorzugsweise an einem Anschlussflansch am Auslass des Gehäuses angeordnet ist. Der Flanschkörper der Druckhalteeinheit versperrt einen Großteil des Auslasses am Gehäuse der Filter-Vorrichtung, wodurch eine unter Umständen angestrebte Verringerung des Strömungsquerschnitts einfach verwirklicht ist. Speziell in Verbindung mit einer als Düse oder Blende ausgebildeten Druckhalteeinheit ist durch die Verringerung des Strömungsquerschnitts der geforderte Druckanstieg im Gehäuse der Filter-Vorrichtung bewirkt, wobei jedoch das Erzeugen eines Druckes im Gehäuse in Verbindung mit dem Strömen des Fluids verbunden ist. Der Flanschkörper der Druckhalteeinheit kann zudem relativ einfach mit einem vorzugsweise am Auslass des Gehäuses angeordneten Anschlussflansch verbunden werden, insbesondere über eine Schraubverbindung an diesem montiert werden.

Vorzugsweise sind am Flanschkörper ein oder mehrere Auslässe vorgesehen, die vorzugsweise kreisbogenförmig ausgebildet sind und auf einer Kreisbahn um eine Mittenachse des Flanschkörpers verlaufen. Mithilfe mehrerer Auslässe am Flanschkörper ist der Strömungsquerschnitt für das zu filternde Fluid im Vergleich zum Strömungsquerschnitt des Gehäuse-Auslasses ohne die darin angeordnete Druckhalteeinheit um 60 % verringert. Damit erfolgt eine Beschränkung des mittels der erfindungsgemäßen Filter-Vorrichtung maximal durchsetzbaren Volumenstroms. Jedoch ist durch die Verringerung des Strömungsquerschnitts an insbesondere dem Auslass des Gehäuses eine derartig ausgebildete Filter-Vorrichtung nunmehr für Anwendungen mit geringeren Volumenströmen einsetzbar. Mithilfe der vorzugsweise kreisbogenförmig um die Mittenachse des Flanschkörpers verlaufenden Auslässe ist bevorzugt der maximal mögliche zur Verfügung stehende Bereich am Flanschkörper zur Ausgestaltung der zum Abführen des gefilterten Fluids verwendeten Auslasses verwendet.

Eine Weiterbildung der erfindungsgemäßen Filter-Vorrichtung sieht vor, dass das Druckhalteventil einen bewegbaren Ventilkörper aufweist, der mittels eines auf den Ventilkörper einwirkenden Federelements in seiner Schließstellung gehalten wird. Der bewegbare Ventilkörper wirkt insbesondere mit einer einen Ventilsitz aufweisenden Ringscheibe zusammen. Die Ringscheibe, welche mit ihrem äußeren Umfang vorzugsweise mit der Wandung des insbesondere zylindrisch ausgebildeten Auslasses des Gehäuses abdichtend in Anlage steht, weist eine bevorzugt kreisförmige, konzentrisch zur Mittenachse der Kreisscheibe angeordnete Ausnehmung auf. Die Ausnehmung an der Ringscheibe wird durch den bewegbaren Ventilkörper in seiner Schließstellung abdichtend verschlossen. Das mit dem Ventilkörper zusammenwirkende Federelement wirkt von dem zur Kreisscheibe entgegengesetzten Ende des Ventilkörpers aus und drückt den Ventilkörper mit einer voreinstellbaren Federkraft gegen die Ringscheibe des Druckhalteventils. Erst oberhalb des durch die Druckhalteeinheit zu gewährleistenden Mindestdruckes im Gehäuse wird der Ventilkörper durch den im Gehäuse wirkenden Fluiddruck von seiner Schließstellung in eine Offenstellung bewegt, sodass das Fluid bevorzugt während des Filtervorgangs vom Einlass in Richtung des Auslasses am Gehäuse strömt.

In einer bevorzugten Ausgestaltung der Filter-Vorrichtung weist das Druckhalteventil eine Aufnahmehülse für den darin bewegbaren Ventilkörper auf, die innerhalb des Gehäuse-Auslasses angeordnet ist und einen mit dem Auslass am Flanschkörper korrespondierenden Ringraum für das ausströmende Fluid definiert, wobei die Aufnahmehülse vorzugsweise am Flanschkörper etwa senkrecht abstehend ausgebildet ist. Mit der bevorzugt zylindrischen Aufnahmehülse ist der Ventilkörper während seiner Öffnungsbewegung störungsfrei geführt. Zudem ist mittels der Aufnahmehülse, welche insbesondere konzentrisch zu dem ebenfalls zylindrischen Auslass am Gehäuse angeordnet ist, und der die Aufnahmehülse umgebenden Wandung des Auslasses ein Ringraum ausgebildet, in dem das Fluid im Wesentlichen parallel zur Mittenachse der Aufnahmehülse strömt. Vorzugsweise entspricht der freie Querschnitt des Ringraums zwischen der Außenseite der Aufnahmehülse und der Wandung des Gehäuse-Auslasses in etwa dem freien Querschnitt der Ausnehmung an der Ringscheibe der Druckhalteeinheit.

In einer bevorzugten Ausführungsform ist die Aufnahmehülse einteilig am Flanschkörper ausgebildet und steht vorzugsweise etwa senkrecht am Flanschkörper ab. Die Aufnahmehülse für den bewegbaren Ventilkörper ist insbesondere mittig am Flanschkörper angeordnet. Insbesondere sind die Mittenachsen von Aufnahmehülse und Flanschkörper konzentrisch angeordnet.

Gemäß einer bevorzugten Weiterbildung der erfindungsgemäßen Filter-Vorrichtung, insbesondere einer Bernoulli-Filter-Vorrichtung, weist die Aufnahmehülse an ihrem Umfang einen oder mehrere Durchbrüche für das den Auslass am Gehäuse passierende, gefilterte Fluid auf, die mit Bewegen des Ventilkörpers aus seiner Schließstellung freigegeben werden. Beim Ausströmen des gefilterten Fluids aus dem Gehäuse der Filter-Vorrichtung ist eine gleichmäßige Kraftwirkung auf den Ventilkörper und damit eine hohe Funktionssicherheit der als Druckhalteventil ausgebildeten Druckhalteeinheit an der Filter-Vorrichtung erreicht. Zudem wird die Strömungsrichtung des gefilterten Fluids insbesondere während des Durchströmens des Druckhalteventils geändert. Bezogen auf die Mittenachse der Aufnahmehülse am Druckhalteventil, tritt das Fluid etwa parallel zur Mittenachse in das Druckhalteventil ein und wird von dem in Strömungsrichtung direkt hinter der Ringscheibe angeordneten Ventilkörper in radialer Richtung zur Mittenachse der Aufnahmehülse umgelenkt. Nach dem Durchströmen der Durchbrüche an der Aufnahmehülse, wobei das gefilterte Fluid etwa gleichmäßig über den Umfang der Aufnahmehülse verteilt wird, gelangt das Fluid in den zwischen der Außenseite der Aufnahmehülse und der Wandung des Auslasses am Gehäuse definierten Ringraum. Im Ringraum strömt das Fluid wiederum etwa parallel zur Mittenachse der Aufnahmehülse in Richtung des mindestens einen am Ende des Ringraumes angeordneten Auslass im Flanschkörper.

Gemäß einer bevorzugten Weiterbildung der Erfindung ist vorgesehen, dass das Gehäuse eine sich entlang einer Gehäuse-Längsachse erstreckende, im Wesentlichen zylindrische Filterkammer aufweist, innerhalb derer das Filterelement angeordnet ist. Vorzugsweise ist das Filterelement mit seinen einander gegenüberliegenden Enden abdichtend im Gehäuse aufgenommen, sodass während des Filtervorgangs ein unerwünschtes Vorbeiströmen des zu filternden Fluids am Filterelement vermieden ist. Vorzugsweise weist das Filterelement an jedem seiner Enden jeweils einen zylindrischen Dichtabschnitt auf, der abdichtend mit in der Filterkammer ausgebildeten Aufnahmen korrespondiert. Die Filterkammer erstreckt sich in etwa über zwei Drittel bis etwa vier Fünftel der Gesamthöhe des Gehäuses an der Filter-Vorrichtung.

Gemäß einer Weiterbildung einer insbesondere als Bernoulli-Filter-Vorrichtung ausgebildeten Filter-Vorrichtung ist vorgesehen, die Filter-Reinigungseinrichtung ein Filter-Reinigungselement aufweist, das entlang des Filterelements bewegbar und dazu eingerichtet ist, während des Reinigungsvorgangs entlang eines Abschnitts des Filterelements eine erhöhte Strömungsgeschwindigkeit an einer Innenseite des Filterelements zu erzeugen. Bevorzugt ist mit Vorsehen eines Filter-Reinigungselements und einem Entlangbewegen des Filter-Reinigungselements entlang eines Abschnitts, insbesondere entlang einer Innenseite, des Filterelements neben dem sich zwischen der Innen- und Außenseite des Filterelements aufbauenden vergrößerten Druckunterschied zudem eine Erhöhung der Strömungsgeschwindigkeit des Spülstroms bewirkt, welche lokal die Rückspülwirkung in dem Abschnitt des Filterelements verbessert.

In einer möglichen bevorzugten Ausführungsform der Filter-Vorrichtung ist der Einlass an einem ersten Ende des Gehäuses, insbesondere einem unteren Ende einer das Filterelement aufnehmenden Filterkammer, angeordnet und/oder der Auslass ist an einem Umfangsabschnitt des Gehäuses angeordnet, wobei der Auslass vorzugsweise etwa radial zur Gehäuse-Längsachse ausgerichtet ist. Über den Einlass am insbesondere unteren Ende des Gehäuses bzw. der Filterkammer strömt das zu filternde Fluid in den inneren freien Querschnitt des Filterelements hinein, von dem aus das Fluid das Filterelement im Wesentlichen in radialer Richtung von der Innenseite zur Außenseite des Filterelements durchströmt. Das sich auf der Außenseite des Filterelements befindende, nunmehr gefilterte Fluid wird dann über den Auslass am Gehäuse und die insbesondere im Auslass des Gehäuses installierte Druckhalteeinheit in eine an den Auslass der Filter-Vorrichtung angeschlossenen Fluidleitung abgeführt. Der Auslass des Gehäuses ist insbesondere an einem Umfangsabschnitt des Gehäuses angeordnet. Vorzugsweise verläuft der Gehäuse-Auslass mit seiner Druckhalteeinheit etwa radial zur Gehäuse-Längsachse, wodurch das Abführen des gefilterten Fluids von der gesamten äußeren Umfangsfläche in Richtung des Auslasses vergleichmäßigt ist.

Gemäß einer bevorzugten Weiterbildung ist die Filter-Reinigungseinrichtung an dem zum ersten Ende gegenüberliegenden zweiten Ende der Filterkammer angeordnet, von dem aus das Filter-Reinigungselement, welches eine an einem Ende einer Hubstange angeordnete Spülscheibe ist, entlang der Innenseite des Filterelements bewegbar ist. Mithilfe der am zum Einlass gegenüberliegenden Ende angeordneten Filter-Reinigungseinrichtung ist das Einführen des insbesondere als Spülscheibe ausgebildeten Filter-Reinigungselements in den freien Innenraum des Filterelements und damit entlang der durch das Filtern mit Rückständen belasteten Innenseite des Filterelements bewirkt. Das Filter-Reinigungselement ist im Außendurchmesser geringfügig kleiner als der Innendurchmesser des zylindrischen Filterelements, wobei bevorzugt zwischen der Innenseite des Filterelements und dem Filter-Reinigungselement ein gleichmäßiger Reinigungsspalt ausgebildet ist. Strömt während des Reinigens, insbesondere des Spülens des Filters, das Fluid in axialer Richtung durch das Filterelement, muss das Fluid zwischen der Innenseite des Filterelements und der Spülscheibe hindurchströmen. Dadurch wird lokal die Strömungsgeschwindigkeit stark erhöht und der statische Druck entsprechend vermindert, wodurch an der Innenseite des Filterelements abgelagerte Rückstände herausgelöst werden und das Filterelement gereinigt wird. Neben der Erhöhung der Strömungsgeschwindigkeit wird durch den Druck im Gehäuse und auf der Außenseite des Filterelements eine Art Rückspülwirkung von der Außenseite in Richtung der Innenseite erzeugt, die das Herauslösen der Rückstände aus dem Filterelement weiter begünstigt.

Das Filter-Reinigungselement wird insbesondere mithilfe einer Hubstange vom oberen Ende des Gehäuses aus in den freien Innenraum des Filterelements in der Filterkammer hineinbewegt. In einer bevorzugten Ausführung weist das Filter-Reinigungselement einen mit seiner Hubstange gekoppelten Aktuator zum gesteuerten Bewegen entlang der Innenseite des Filterelements auf. Der zum Bewegen des Filter-Reinigungselements verwendete Aktuator kann beispielsweise hydraulisch, pneumatisch, elektrisch, elektromagnetisch oder auch auf andere Weise ausgebildet sein. Über den Aktuator erfolgt eine exakte Ansteuerung des als Spülscheibe ausgebildeten Filter-Reinigungselements, sodass eine zuverlässige Reinigungsfunktion an der erfindungsgemäßen Filter-Vorrichtung, insbesondere der Bernoulli-Filter-Vorrichtung, erzielt ist.

Gemäß einer bevorzugten Weiterbildung weist die Filter-Reinigungseinrichtung ein Spülsystem mit mindestens einem Spülauslass am Gehäuse zum Erzeugen eines Spülstroms vom Einlass durch das Gehäuse zum Spülauslass auf. Statt die Durchflussrichtung durch das Filterelement kurzzeitig umzukehren, erfolgt das Einführen des Fluids zum Spülen des Filterelements ebenfalls über den Einlass. Das über den Einlass eintretende Fluid durchströmt während des Spülvorgangs die Filterkammer in rein axialer Richtung und erzeugt vorrangig nur eine Strömung an der Innenseite des Filterelements. Das beim Spülen mit den im Filterelement zurückgehaltenen Rückstände beladene Fluid wird zusammen mit den Rückständen in Richtung des zweiten, oberen Endes des Gehäuses geleitet und über einen mit dem zweiten Ende des Gehäuses fluidleitend verbundenen Spülauslass aus der erfindungsgemäßen Filter-Vorrichtung abgeführt.

Vorzugsweise ist der Spülauslass mit dem zweiten Ende des Gehäuses fluidleitend verbunden und durch ein stromaufwärts des Spülauslasses angeordnetes, betätigbares Sperrorgan in Fluidverbindung mit der Fluidkammer bringbar. Das Umschalten zwischen der Filterfunktion und dem Reinigungsvorgang an der erfindungsgemäßen Filter-Vorrichtung kann durch einfaches Betätigen des stromaufwärts des Spülauslasses angeordneten Sperrorgans vorgenommen werden. Mit Öffnen des Sperrorgans schließt die Druckhalteeinheit, so dass das zu filternde Fluid statt weiterhin durch das Filterelement nunmehr in Richtung des dem Einlass am Gehäuse gegenüberliegenden zweiten Endes des Gehäuses und weiter in Richtung des Spülauslasses strömt, wobei mittels des Sperrorgans durch Steuern seines Öffnungsgrades ebenfalls der zum Reinigen des Filterelements im Gehäuse geforderte Mindestdruck aufrechterhalten wird. In Verbindung mit der erfindungsgemäßen Druckhalteeinheit ist bewirkt, dass kein Druck in Richtung des Gehäuse-Auslasses abgebaut wird. Die bevorzugt als Druckhalteventil ausgebildete Druckhalteeinheit geht mit ihrem Ventilkörper selbsttätig in Schließstellung, wodurch ein Zurückströmen des Fluids und einem ungewollten Eintritt von Luft in das Gehäuse der Filter-Vorrichtung entgegengewirkt ist. Das stromaufwärts des Spülauslasses angeordnete Sperrorgan ist vorliegend ein in seiner Öffnungsstellung stufenlos einstellbares Sperrventil.

Die Erfindung betrifft gemäß einem weiteren Aspekt ein Verfahren zum Reinigen einer Filter-Vorrichtung, insbesondere einer Bernoulli-Filter-Vorrichtung, vorzugsweise nach mindestens einer der vorstehenden bevorzugten Ausführungsformen.

Das erfindungsgemäße Verfahren löst die eingangs beschriebene Aufgabe mit den Schritten: Einbringen eines Fluids über einen Einlass eines Gehäuses und Erzeugen eines Spülstroms innerhalb des Gehäuses zum Reinigen eines im Gehäuse aufgenommenen Filterelements; Erzeugen einer erhöhten Strömungsgeschwindigkeit des Spülstroms zwischen einem Filter-Reinigungselement, welches beim Reinigen entlang des Filterelements bewegt wird, und einer Innenseite des Filterelements; Ausgeben des zum Reinigen des Filterelements verwendeten Fluids über einen im Filterbetrieb der Vorrichtung mittels eines Sperrorgans versperrbaren Spülauslass am Gehäuse, und Aufrechterhalten eines definierten Mindestdruckes innerhalb des Gehäuses während des Reinigungsvorgangs mittels einer Druckhalteeinheit, welche an einem im Filterbetrieb zum Ausgeben des gefilterten Fluids verwendeten Auslass des Gehäuses angeordnet ist, und vorzugsweise mittels des stromaufwärts des Spülauslasses angeordneten Sperrorgans. Dem erfindungsgemäßen Verfahren liegt die Erkenntnis zugrunde, dass mit dem Aufrechterhalten eines definierten Mindestdruckes innerhalb des Gehäuses, insbesondere einer innerhalb des Gehäuses ausgebildeten Filterkammer, ein vorbestimmter Druck auf der Außenseite des Filterelements wirkt, der während des Spülvorgangs und dem damit verbundenen Entlangbewegen des Filter-Reinigungselements an dem Filterelement neben der erhöhten Strömungsgeschwindigkeit zwischen dem Filter-Reinigungselement und der Innenseite des Filterelements lokal eine Art Rückspülwirkung des Fluids von der Außenseite des Filterelements in Richtung der Innenseite des Filterelements bewirkt ist. Damit können in Verbindung mit einer Filter-Vorrichtung nunmehr vergleichsweise feine Filterelemente eingesetzt werden, die ohne das Aufrechterhalten eines Mindestdruckes innerhalb des Gehäuses nach Durchlaufen eines Filtervorgangs nicht zuverlässig von darin abgesetzten Rückständen gereinigt werden könnten. Vorzugsweise können mittels des erfindungsgemäßen Verfahrens auch an Filter-Vorrichtungen Filterelemente, insbesondere Bernoulli-Filter-Vorrichtungen, mit einer Porengröße von kleiner 100 µm, bevorzugt von kleiner etwa 70 µm, besonders bevorzugt von kleiner 40 µm, zum Filtern von Fluiden eingesetzt und mit den verwendeten Filterelementen die gewünschten Standzeiten erzielt werden.

Die zur erfindungsgemäßen Filter-Vorrichtung beschriebenen Ausführungsformen bzw. Weiterbildungen sind zugleich auch bevorzugte Ausführungsformen des erfindungsgemäßen Verfahrens zum Reinigen einer Filter-Vorrichtung und umgekehrt, sofern sich bestimmte Merkmale nicht widersprechen.

Die Erfindung wird im Folgenden anhand eines bevorzugten Ausführungsbeispiels einer Filter-Vorrichtung unter Bezugnahme auf die beigefügten Figuren näher beschrieben. Hierbei zeigen:
- Fig. 1:: eine perspektivische Ansicht einer teilweise geschnitten dargestellten erfindungsgemäßen Filter-Vorrichtung mit ihrer Druckhalteeinheit;
- Fig. 2:: eine perspektivische Ansicht der teilweise geschnitten dargestellten Filter-Vorrichtung mit der im Schnitt dargestellten Druckhalteeinheit;
- Fig. 3:: eine Schnittdarstellung der erfindungsgemäßen Filter-Vorrichtung und einem daran aufgenommenen Filterelement, und
- Fig. 4: eine vergrößerte Ansicht der Druckhalteeinheit aus Fig.3 .

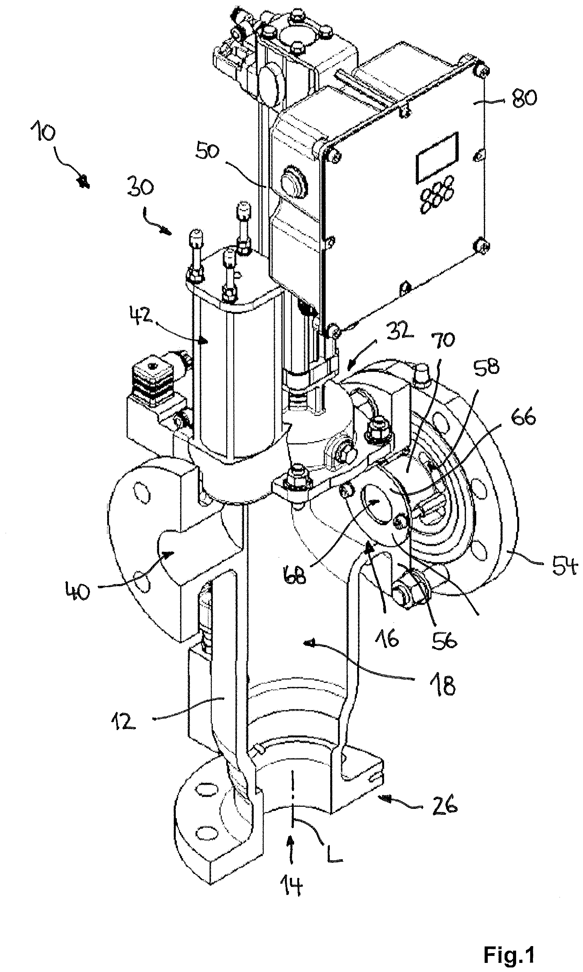

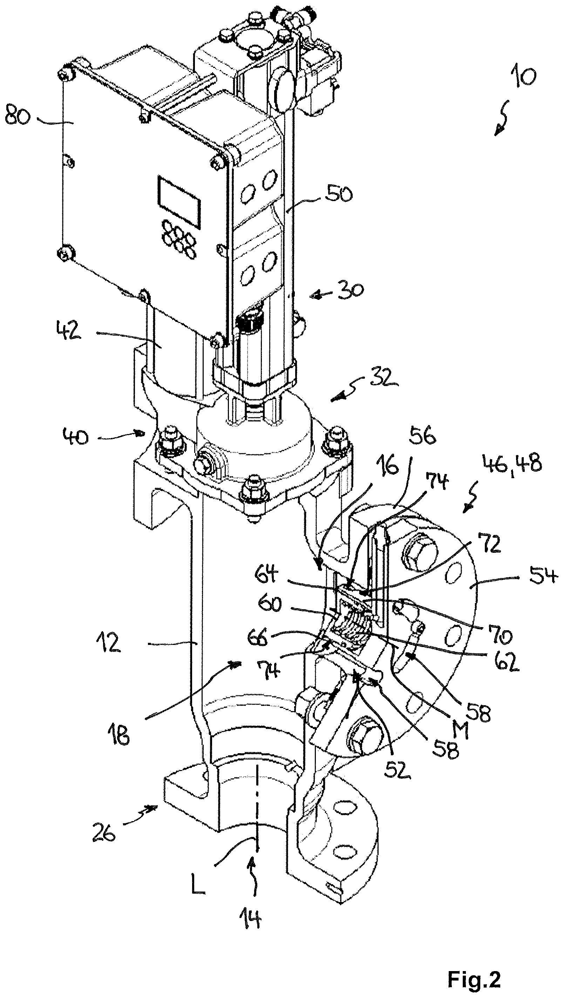

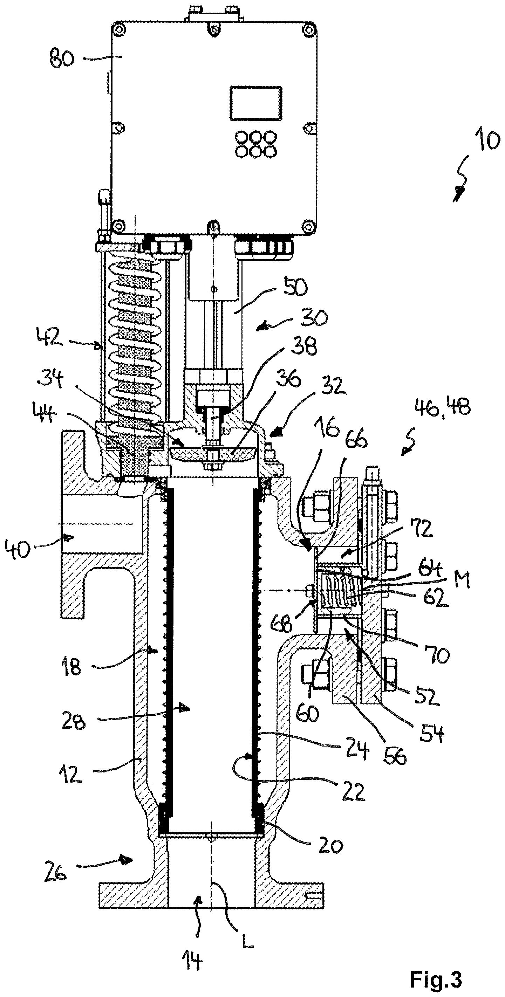

Fig. 1 und 2 zeigen eine -Filter-Vorrichtung 10 zum Filtern eines Fluids, insbesondere Bernoulli-Filter-Vorrichtung 10. Die Vorrichtung 10 umfasst ein Gehäuse 12 mit einem Einlass 14 zum Einbringen des zu filternden Fluids in das Gehäuse 12 und einen Auslass 16 zum Ausgeben des gefilterten Fluids aus dem Gehäuse 12. Das Gehäuse 12 weist eine sich entlang einer Gehäuse-Längsachse L erstreckende, im Wesentlichen zylindrische Filterkammer 18 auf, innerhalb derer ein Filterelement 20 (Fig. 3) angeordnet ist. Das Filterelement 20 ist zum Herausfiltern von Verunreinigungen aus einem die Filter-Vorrichtung 10 passierenden Fluid eingerichtet. Während des Filtervorgangs strömt das zu filternde Fluid im Wesentlichen von der Innenseite 22 in Richtung der Außenseite 24 des Filterelements 20.

Der Einlass 14 ist an einem ersten Ende 26 des Gehäuses 12, insbesondere einem unteren Ende der das Filterelement 20 aufnehmenden Filterkammer 18 angeordnet. Der Auslass 16 ist an einem Umfangsabschnitt des Gehäuses 12 ausgebildet, wobei der Auslass 16 etwa radial zur Gehäuse-Längsachse L ausgerichtet ist. Im Filterbetrieb der Filter-Vorrichtung 10 strömt das zu filternde Fluid über den Einlass 14 in den freien Innenraum 28 im Filterelement 20 und von da aus etwa gleichmäßig über den Umfang des Filterelements 20 verteilt in radialer Richtung durch das Filterelement 20 hindurch in Richtung des am Umfang des Gehäuses 12 angeordneten Auslasses 16 und weiter in eine nicht näher dargestellte Fluidleitung.

Zum Reinigen des Filterelements 20, was in bestimmten Zeitabständen, insbesondere auch in Abhängigkeit von dem Grad der Verschmutzung des Filterelements 20, und somit diskontinuierlich an der Filter-Vorrichtung 10 erfolgt, weist die Vorrichtung 10 eine Filter-Reinigungseinrichtung 30 auf, die zum Reinigen des Filterelements 20 von daran abgelagerten Rückständen aus dem gefilterten Fluid eingerichtet ist.

Die Filter-Reinigungseinrichtung 30 ist, wie weiter in Fig. 3 zu sehen, insbesondere an einem zum ersten Ende 26 gegenüberliegenden zweiten Ende 32 des Gehäuses 12 angeordnet und umfasst ein Filter-Reinigungselement 34. Das Filter-Reinigungselement 34 wird von dem zweiten Ende 32 des Gehäuses 12 aus entlang des Filterelements 20, bevorzugt entlang der Innenseite 22 des Filterelements 20, bewegt. Das Reinigen des Filterelements 20 wird zusammen mit dem Entlangbewegen des Filter-Reinigungselements 34, das in einer bevorzugten Ausführung als Spülscheibe 36 ausgebildet und an einem Ende einer beweglich geführten Hubstange 38 angeordnet ist, das Filterelement 20 von einem nicht näher gezeigten Spülsystem vom Einlass 14 her gespült. Beim Spülen des Filterelements 20 wird das über den Einlass 14 eingebrachte Fluid anstatt in Richtung des Auslasses 16 nunmehr in Richtung eines Spülauslasses 40 des Spülsystems geleitet. Der durch das Gehäuse 12 erzeugte Spülstrom fließt vom Einlass am ersten Ende 26 in Richtung des oberen Endes 32 am Gehäuse 12 und von da aus zu dem mit dem zweiten Ende 32 des Gehäuses 12 fluidleitend verbundenen Spülauslass 40. Während des Reinigens- bzw. Spülens wird an einem jeweils wechselnden Abschnitt des Filterelements 20 lokal eine erhöhte Strömungsgeschwindigkeit an der Innenseite 22 des Filterelements erzeugt. Um den Spülstrom zu stoppen bzw. freizugeben, ist stromaufwärts des Spülauslasses 40 ein Sperrorgan 42 in Form eines elektromagnetischen Sperrventils 44 angeordnet, das im unbetätigten Zustand in seiner Schließstellung verharrt. Erst mit Betätigen des Sperrorgans 42 wird die fluidleitende Verbindung vom zweiten Ende 32 des Gehäuses 12 zum Spülauslass 40 hergestellt.

Um in speziellen Anwendungsfällen, die das Vorsehen von Filterelementen mit vergleichsweise hoher Feinheit notwendig machen, also Filterelementen mit einer Porengröße kleiner 200 µm, insbesondere kleiner 100 µm, bevorzugt kleiner 70 µm, besonders bevorzugt kleiner 40 µm, eine wirksame Reinigung derartiger Filterelemente 20 zu gewährleisten, ist gemäß der vorliegenden Erfindung vorgesehen, dass dem Auslass 16 für das gefilterte Fluid am Gehäuse 12 eine Druckhalteeinheit 46 zum Aufrechterhalten eines definierten Mindestdruckes im Gehäuse 12 während des Reinigungsvorgangs zugeordnet ist. Mit der Druckhalteeinheit 46, die unmittelbar in den Auslass 16 am Gehäuse 12 integriert ist, wird nunmehr durch den beim Spülvorgang auf der Außenseite 24 des Filterelements 20 dauerhaft anstehenden Druck beim Entlangbewegen des Filter-Reinigungselements 34 zusätzlich zu der erzeugten, erhöhten Strömungsgeschwindigkeit zwischen dem Filter-Reinigungselement 34 und der Innenseite 22 des Filterelements eine Art Rückspülwirkung des Fluids von der Außenseite 24 in Richtung der Innenseite 22 des Filterelements erzeugt. Durch die Rückspülwirkung ist das Herauslösen möglicher im Filterelement 20 angesammelter Rückstände unterstützt. Mit der am Auslass 16 des Gehäuses 12 angeordneten Druckhalteeinheit 46 ist die Reinigungswirkung an der erfindungsgemäß als Bernoulli-Filter-Vorrichtung ausgebildeten Filter-Vorrichtung 10 derart verbessert, dass selbst Filterelemente 20 mit einer Porengröße kleiner 100 µm, vorzugsweise kleiner 70 µm, besonders bevorzugt kleiner 40 µm, zuverlässig gereinigt werden können.

Die Druckhalteeinheit 46 ist in der vorliegend in Fig. 3 gezeigten Ausführung als Druckhalteventil 48 ausgebildet, kann aber auch in einer nicht näher gezeigten Ausführung als Düse oder einstellbare Blende ausgeführt sein. Das Bewegen des Filter-Reinigungselements 34 wird mittels eines Aktuators 50 vorgenommen, der mit der Hubstange 38 des Filter-Reinigungselements 34 gekoppelt ist. Die Druckhalteeinheit 46 weist in einer möglichen Ausführung einen Kanalabschnitt 52 für das bereits gefilterte Fluid auf, der bezogen auf den Auslass 16 am Gehäuse 12, ohne die Druckhalteeinheit 46, einen verringerten freien Querschnitt hat. Die Druckhalteeinheit 46 umfasst einen Flanschkörper 54, mittels dessen der Auslassquerschnitt der Druckhalteeinheit 46 an der Filter-Vorrichtung 10 definiert wird. Der Flanschkörper 54 ist an einem Anschlussflansch 56 am Auslass 16 des Gehäuses 12 angeordnet. Der Flanschkörper 54 versperrt dabei nahezu vollständig den Auslass 16 des Gehäuses 12.

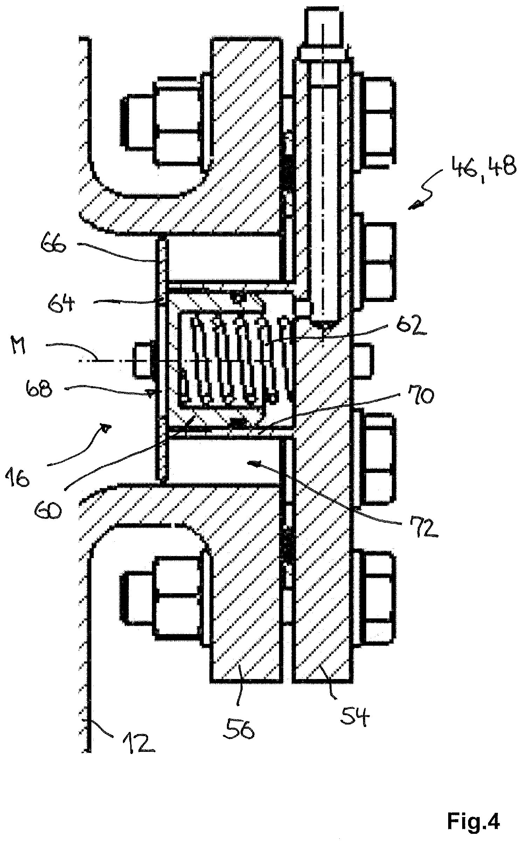

Am Flanschkörper 54 sind ein oder mehrere Auslässe 58 vorgesehen, die insbesondere kreisbogenförmig ausgebildet sind und auf einer Kreisbahn um eine Mittenachse M des Flanschkörpers 52 herum verlaufen. Die als Druckhalteventil 48 ausgebildete Druckhalteeinheit 46 weist, wie der vergrößerten Ansicht aus Fig.4 zu entnehmen, einen bewegbaren Ventilkörper 60 auf, der mittels eines auf den Ventilkörper 60 einwirkenden Federelements 62 in seiner Schließstellung mit einem Ventilsitz 64 einer Ringscheibe 66 gehalten wird. Die Ringscheibe 66 weist eine zentrale Ausnehmung 68 auf, welche den Austrittsbereich aus der Filterkammer 18 des Gehäuses 12 und den Eintrittsbereich für das gefilterte Fluid an der Druckhalteeinheit 46 ausbildet.

Das Druckhalteventil 48 umfasst zudem eine Aufnahmehülse 70 für den darin bewegbaren Ventilkörper 60 des Druckhalteventils 48. Die Aufnahmehülse 70 ist in der vorliegend gezeigten Ausführung am Flanschkörper 54 angeordnet, insbesondere mit diesem einteilig ausgebildet. Die Aufnahmehülse 70 steht etwa senkrecht an einer Stirnseite des Flanschkörpers 54 um dessen Mittenachse M herum ab. Die Aufnahmehülse 70 ist innerhalb des Auslasses 16 am Gehäuse 12 angeordnet und definiert zusammen mit dem die Aufnahmehülse 70 außenseitig umgebenden Auslass 16 am Gehäuse 12 einen Ringraum 72 für das ausströmende, gefilterte Fluid. Der Ringraum 72 ist dabei korrespondierend zu den Auslässen 58 am Flanschkörper 54 angeordnet.

Ferner umfasst die Aufnahmehülse 70 an ihrem Umfang einen oder mehrere Durchbrüche 74 für das Fluid, der oder die mit Bewegen des Ventilkörpers 60 aus seiner Schließstellung freigegeben werden. Beim Durchströmen der Druckhalteeinheit 46 wird das gefilterte Fluid mindestens zweimal innerhalb der Druckhalteeinheit 46 umgelenkt, wobei der in der Aufnahmehülse 70 bewegbar gehaltene Ventilkörper 60 nahezu vollständig von dem die Druckhalteeinheit durch den die Aufnahmehülse 70 umgebenden Ringraum 72 eingehaust ist.

Zum gezielten Ansteuern des Aktuators 50 der Filter-Reinigungseinrichtung 30 und des Sperrorgans 42 an der Filter-Vorrichtung 10 ist eine Steuerung 80 vorgesehen.

Mithilfe der Filter-Vorrichtung 10 ist ein Verfahren zum Reinigen einer solchen Vorrichtung umgesetzt, welches die Schritte aufweist: Einbringen eines Fluids über einen Einlass 14 eines Gehäuses 12 und Erzeugen eines Spülstroms innerhalb des Gehäuses 12 zum Reinigen eines im Gehäuse 12 aufgenommenen Filterelements 20; Erzeugen einer erhöhten Strömungsgeschwindigkeit des Spülstroms zwischen einem Filter-Reinigungselement 34, welches beim Reinigen entlang des Filterelements 20 bewegt wird, und einer Innenseite 22 des Filterelements 20; Ausgeben des zum Reinigen des Filterelements 20 verwendeten Fluids über einen im Filterbetrieb der Vorrichtung 10 mittels eines Sperrorgans 42 versperrbaren Spülauslass 40 am Gehäuse 12, und Aufrechterhalten eines definierten Mindestdruckes pₘᵢₙ innerhalb des Gehäuses 12 während des Reinigungsvorgangs mittels einer Druckhalteeinheit 46, welche an einem im Filterbetrieb zum Ausgeben des gefilterten Fluids verwendeten Auslass 16 des Gehäuses 12 angeordnet ist, und des stromaufwärts des Spülauslasses 40 angeordneten Sperrorgans 42.

### Bezugszeichenliste

- 10: Filter-Vorrichtung
- 12: Gehäuse
- 14: Einlass
- 16: Auslass
- 18: Filterkammer
- 20: Filterelement
- 22: Innenseite
- 24: Außenseite
- 26: Ende
- 28: Innenraum
- 30: Filter-Reinigungseinrichtung
- 32: Ende
- 34: Filter-Reinigungselement
- 36: Spülscheibe
- 38: Hubstange
- 40: Spülauslass
- 42: Sperrorgan
- 44: Sperrventil
- 46: Druckhalteeinheit
- 48: Druckhalteventil
- 50: Aktuator
- 52: Kanalabschnitt
- 54: Flanschkörper
- 56: Anschlussflansch
- 58: Auslass
- 60: Ventilkörper
- 62: Federelement
- 64: Ventilsitz
- 66: Ringscheibe
- 68: Ausnehmung
- 70: Aufnahmehülse
- 72: Ringraum
- 74: Durchbruch
- 80: Steuerung
- L: Gehäuse-Längsachse
- M: Mittenachse
- pₘᵢₙ: Mindestdruck

## Patentansprüche

1. Filter-Vorrichtung (10) zum Filtern eines Fluids, insbesondere Bernoulli-Filter-Vorrichtung (10), aufweisend
ein Gehäuse (12),
einen Einlass (14) zum Einbringen des zu filternden Fluids in das Gehäuse (12), wenigstens ein in dem Gehäuse (12) angeordnetes Filterelement (20) zum Filtern des Fluids,
einen Auslass (16) zum Ausgeben des gefilterten Fluids aus dem Gehäuse (12), und eine Filter-Reinigungseinrichtung (30) zum Reinigen des Filterelements (20) von Rückständen des gefilterten Fluids,
**dadurch gekennzeichnet, dass** dem Auslass (16) für das gefilterte Fluid am Gehäuse (12) eine Druckhalteeinheit (46) zum Aufrechterhalten eines definierten Mindestdruckes (pₘᵢₙ) im Gehäuse (12) während des Reinigens zugeordnet ist.

2. Filter-Vorrichtung (10) nach Anspruch 1,
**dadurch gekennzeichnet, dass** die Filter-Reinigungseinrichtung (30) dazu eingerichtet ist, Filterelemente (20) mit einer Porengröße kleiner 100 µm, vorzugsweise kleiner 70 µm, besonders bevorzugt kleiner 40 µm zu reinigen.

3. Filter-Vorrichtung (10) nach Anspruch 1 oder 2,
**dadurch gekennzeichnet, dass** die Druckhalteeinheit (34) unmittelbar in den Auslass (16) am Gehäuse (12) integriert ist.

4. Filter-Vorrichtung (10) nach einem der Ansprüche 1 bis 3,
**dadurch gekennzeichnet, dass** die Druckhalteeinheit (34) einen Kanalabschnitt (52) für das gefilterte Fluid aufweist, der, bezogen auf den Auslass (16) am Gehäuse (12), einen verringerten Querschnitt hat.

5. Filter-Vorrichtung nach einem der vorstehenden Ansprüche,
**dadurch gekennzeichnet, dass** die Druckhalteeinheit (46) als Druckhalteventil (48) ausgebildet ist.

6. Filter-Vorrichtung (10) nach einem der vorstehenden Ansprüche,
**dadurch gekennzeichnet, dass** die Druckhalteeinheit (34) einen ihren Auslassquerschnitt definierenden Flanschkörper (54) aufweist, der vorzugsweise an einem Anschlussflansch (56) am Gehäuse-Auslass (16) angeordnet ist.

7. Filter-Vorrichtung (10) nach Anspruch 6,
**dadurch gekennzeichnet, dass** am Flanschkörper (54) mehrere Auslässe (58) vorgesehen sind, die vorzugsweise kreisbogenförmig auf einer Kreisbahn um eine Mittenachse (M) des Flanschkörpers (54) verlaufen.

8. Filter-Vorrichtung (10) nach einem der vorstehenden Ansprüche 5 bis 7,
**dadurch gekennzeichnet, dass** das Druckhalteventil (48) einen bewegbaren Ventilkörper (60) aufweist, der mittels eines auf den Ventilkörper (60) einwirkenden Federelements (62) in seiner Schließstellung gehalten wird.

9. Filter-Vorrichtung (10) nach einem der vorstehenden Ansprüche,
**dadurch gekennzeichnet, dass** das Druckhalteventil (34) eine Aufnahmehülse (70) für den darin bewegbaren Ventilkörper (60) aufweist, die innerhalb des Gehäuse-Auslasses (16) angeordnet ist und einen mit dem Auslass (58) am Flanschkörper (54) korrespondierenden Ringraum (72) für das ausströmende Fluid definiert, wobei die Aufnahmehülse (70) vorzugsweise am Flanschkörper (54) etwa senkrecht abstehend ausgebildet ist.

10. Filter-Vorrichtung (10) nach Anspruch 9,
**dadurch gekennzeichnet, dass** die Aufnahmehülse (70) an ihrem Umfang einen oder mehrere Durchbrüche (74) für das Fluid aufweist, die mit Bewegen des Ventilkörpers (70) aus seiner Schließstellung freigegeben werden.

11. Filter-Vorrichtung (10) nach einem der vorstehenden Ansprüche,
**dadurch gekennzeichnet, dass** das Gehäuse (12) eine sich entlang einer Gehäuse-Längsachse (L) erstreckende, im wesentlichen zylindrische Filterkammer (18) aufweist, innerhalb der das Filterelement (20) angeordnet ist und/oder
die Filter-Reinigungseinrichtung (30) ein Filter-Reinigungselement (34) aufweist, das entlang des Filterelements (20) bewegbar und dazu eingerichtet ist, während des Reinigungsvorgangs entlang eines Abschnitts des Filterelements (20) eine erhöhte Strömungsgeschwindigkeit an einer Innenseite (22) des Filterelements (20) zu erzeugen.

12. Filter-Vorrichtung (10) nach einem der vorstehenden Ansprüche,
**dadurch gekennzeichnet, dass** der Einlass (14) an einem ersten Ende (26) des Gehäuses (12), insbesondere einem unteren Ende einer das Filterelement (20) aufnehmenden Filterkammer (18), angeordnet und/oder der Auslass (16) an einem Umfangsabschnitt des Gehäuses (12) angeordnet ist, wobei der Auslass (16) vorzugsweise etwa radial zur Gehäuse-Längsachse (L) ausgerichtet ist.

13. Filter-Vorrichtung (10) nach Anspruch 11,
**dadurch gekennzeichnet, dass** die Filter-Reinigungseinrichtung (30) an dem zum ersten Ende (26) gegenüberliegenden zweiten Ende (32) des Gehäuses (12) angeordnet ist, vom dem aus das Filter-Reinigungselement (34), welches eine an einem Ende einer Hubstange (38) angeordnete Spülscheibe (36) ist, entlang der Innenseite (22) des Filterelements (20) bewegbar ist,
wobei vorzugsweise das Filter-Reinigungselement (34) einen mit seiner Hubstange (38) gekoppelten Aktuator (50) zum gesteuerten Bewegen entlang der Innenseite (22) des Filterelements (20) aufweist.

14. Filter-Vorrichtung (10) nach einem der vorstehenden Ansprüche,
**dadurch gekennzeichnet, dass** die Filter-Reinigungseinrichtung (34) ein Spülsystem mit mindesten einem Spülauslass (40) am Gehäuse (12) zum Erzeugen eines Spülstroms vom Einlass (14) durch das Gehäuse (12) zum Spülauslass (40) aufweist,
wobei vorzugsweise der Spülauslass (40) mit dem zweiten Ende (32) des Gehäuses (12) fluidleitend verbunden und durch ein stromaufwärts des Spülauslasses (40) angeordnetes, betätigbares Sperrorgan (42) in Fluidverbindung mit der Filterkammer (18) bringbar ist.

15. Verfahren zum Reinigen einer Filter-Vorrichtung (10), insbesondere einer Bernoulli-Filter-Vorrichtung (10), vorzugsweise nach mindestens einem der vorstehenden Ansprüche, umfassend die Schritte:
- Einbringen eines Fluids über einen Einlass (14) eines Gehäuses (12) und Erzeugen eines Spülstroms innerhalb des Gehäuses (12) zum Reinigen eines im Gehäuse (12) aufgenommenen Filterelements (20);
- Erzeugen des Spülstroms entlang des Filterelements (20), insbesondere entlang einer Innenseite (22) des Filterelements (20), vorzugsweise Erzeugen einer erhöhten Strömungsgeschwindigkeit des Spülstroms zwischen einem Filter-Reinigungselement (34), welches beim Reinigen entlang des Filterelements (20) bewegt wird, und einer Innenseite (22) des Filterelements (20);
- Ausgeben des zum Reinigen des Filterelements (20) verwendeten Fluids über einen im Filterbetrieb der Vorrichtung (10) mittels eines Sperrorgans (42) versperrbaren Spülauslass (40) am Gehäuse (12), und
- Aufrechterhalten eines definierten Mindestdruckes (pₘᵢₙ) innerhalb des Gehäuses (12) während des Reinigungsvorgangs mittels einer Druckhalteeinheit (46), welche an einem im Filterbetrieb zum Ausgeben des gefilterten Fluids verwendeten Auslass (16) des Gehäuses (12) angeordnet ist, und vorzugsweise mittels des stromaufwärts des Spülauslasses (40) angeordneten Sperrorgans (42).
